# EUROPEAN PATENT SPECIFICATION

(11) **EP 2 999 915 B1**
(45) Date of publication and mention of the grant of the patent: **25.07.2018**
(21) Application number: 14726561.5
(22) Date of filing: 20.05.2014
(51) Int. Cl.: F17C 13/04

(54) **A PRESSURIZSE FLUID CYLINDER WITH A LEVER**
UNTER DRUCK STEHENDER FLUIDZYLINDER MIT EINEM HEBEL
CYLINDRE DE FLUIDE SOUS PRESSION

(30) Priority: 20.05.2013 GB 201309045
(43) Date of publication of application: 30.03.2016
(73) Proprietor: Linde Aktiengesellschaft, 80331 München (DE)
(72) Inventor: WALES, Duncan, Castor Cambridgeshire PE5 7AX (GB); MELLORS, Mark, Hitchin Hertfordshire SG4 0NX (GB)
(74) Representative: Richmond, Sarah
(86) International application number: PCT/EP2014/060329
(87) International publication number: WO 2014/187819

(56) References cited:
- EP-A1- 1 426 663
- FR-A- 1 192 126
- FR-A- 1 212 848
- FR-A1- 2 979 687

## Description

The present invention relates to a pressurised fluid cylinder having a shut off valve. In particular, the invention relates to a pressurised gas cylinder for use, for example, with medical gasses, welding gasses and the like.

Such cylinders are traditionally provided with a shut off valve at the top of the cylinder which is protected by a guard. The valve has a valve element which is moved towards and away from a seat by rotation of a screw mechanism. This consists of a hand wheel with a male screw which mates with a female screw thread in the valve body. The user can therefore open and close the shut off valve by rotating the hand wheel to raise and lower the valve element.

Although such mechanisms are widely used, they suffer from a number of problems. The hand wheel requires multiple rotations in order to rotate it which is time consuming and it is not particularly accessible when the guard is in place. Further, it can be stuck in a fully open or a fully closed position. Although arrows are usually present on the wheel to indicate the direction of opening and closing to the user, it is difficult to determine by sight the current position of the wheel, such that the user can, for example, attempt to open an already fully open valve and mistakenly believe the valve to be stuck.

A further difficulty with the fact that there is no clear indication of position is that a user may not fully close a valve as there is no clear indication that the valve has reached the fully closed position, thereby leading to inadvertent leakage from the container.

A number of these problems are overcome by using a lever in place of a hand wheel.

A lever provides good mechanical advantage and its position can provide a clear indication of the position of the valve. The lever can, in one position, be placed alongside the container such that it is reasonably well protected from damage. However, it is required to move to a second position which is generally diametrically opposed to the first position and in such a position, it would be generally vulnerable to damage as such containers are often used in harsh environments and are vulnerable to being hit, dropped or knocked over.

An example of such a device is disclosed in CA2282129. This discloses a lever which has a weakened portion which is designed such that, if the lever is knocked in some way, the weakened portion will break thereby preventing damage to the valve mechanism and leaving enough of the lever in place that the valve can still be operated. The lever has a cam mechanism in order to move the valve element. This requires a relatively high force to open it as it relies on relative sliding motion between components.

Also, in order to provide a 'snap' feature to provide a clear demarcation between a fully open/or closed position and a nearly open/or closed position, an additional mechanism is required which adds further complexity.

FR 2979687 discloses a pressurised fluid cylinder having a shut-off valve, the shut-off valve comprising a valve element which is movable along a main axis towards and away from a valve seat in order to close the valve; a valve stem which is constrained to move axially along the main axis to operate the valve element and a crank for moving the valve stem.

According to the present invention, such a cylinder is characterised by a biasing member arranged to exert a biasing force on the valve element for all orientations of the crank, the crank comprising a first linkage pivotally attached at one end to the valve stem and a second linkage pivotally attached at one end to the second end of the first linkage and being positionally fixed but rotatable about the opposite end; the crank being arranged so that rotation of the first linkage in a first rotational direction initially causes biasing of the biasing member and further rotation of the second linkage causes the linkage to pass a top or bottom dead centre position, at which point a proportion of the energy stored in the biasing member during its biasing causes the first linkage to be biased further in the first rotational direction after the top or bottom dead centre position.

The combination of the crank mechanism together with the biasing member means that, once the top or bottom dead centre position is passed, the user is no longer doing work to compress the biasing member, but is instead benefiting from the return of the energy of compression of the biasing member which they will effectively feel as a "snap" which urges the valve element to a position which may be either a fully open or fully closed position. This not only ensures that the lever is positively in the fully opened or fully closed position, but also provide the user with a "snap" like feel which demonstrates to them that the valve element is fully home. This can be achieved with a simple mechanism and one which does not rely on a sliding cam engagement, so that the forces required to operate it are reduced.

The crank and biasing member may be configured in a number of ways. In one example, the biasing member acts to bias the valve element away from the valve stem with the pressurised fluid working against a biasing member, whereby rotation of the first linkage from an open position of the valve element compresses the biasing member and closes the valve element against the action of the fluid pressure, whereupon passing bottom dead centre causes the biasing member to urge the valve element away from the valve stem thereby causing further rotation of the first linkage member in the first direction to urge it into a fully closed position. In order to open the valve element, the first linkage member is rotated in the opposite direction initially compressing the biasing member until the linkage passes bottom dead centre or whereupon the biasing force of the biasing member and the pressure force act to urge the valve element to the fully open position. This design therefore snaps into the closed position in which it is held by the resilience of the biasing member. It is then relatively easy to open as a user only has to push the first linkage member past the bottom dead centre position, whereupon both the biasing member and the fluid pressure assist with the valve opening.

In an alternative configuration, the biasing member acts to bias the valve element towards the seat with the fluid pressure working against the valve element, whereby to open the valve, the first linkage member is rotated in a first direction to compress the biasing member such that the fluid pressure opens the valve, and whereby movement of the first linkage member in the first rotational direction past a top dead centre position causes the biasing member to urge the first linkage member further in the first direction so as to push the first linkage member into a fully open position. In order to close the valve, the user has to push the first linkage member through the top dead centre position against the action of the biasing member, whereupon, beyond the top dead centre position, the biasing member acts to close the valve element against the fluid pressure.

In both of the above examples, the biasing member and valve element are outside the pressurised gas space and are closed towards the pressurised gas space. However, it is also possible for the valve element and biasing member to be within the pressurised gas space and for the valve to be closed by urging it outwardly of the pressurised gas space. In this case, the biasing member urges the valve element closed and the first linkage member is rotated, from a position in which the valve element is open, in a first direction past the bottom dead centre position compressing the biasing member as it travels towards the bottom dead centre position, whereupon, on passing the bottom dead centre position, the biasing member and fluid pressure urge the first linkage mechanism further in the first direction in order to urge the first linkage member into a fully closed position.

The relationship between the valve stem, valve element and valve housing may be such as to axially limit the rotation of the crank such that it cannot rotate beyond certain design limits. Alternatively, there may be at least one stop which acts against the crank in order to prevent unwanted rotation.

An example of a cylinder in accordance with the present invention will now be described with reference to the accompanying drawings, in which:
Fig. 1 is a cross section through the top of the cylinder and the valve body;

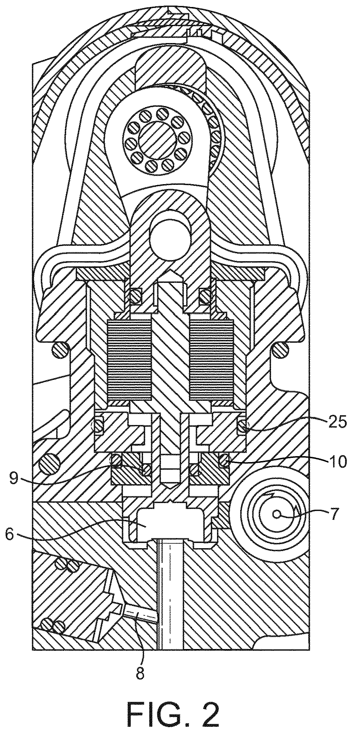

Fig. 2 is a cross section taken along lines II to II in Fig. 1;

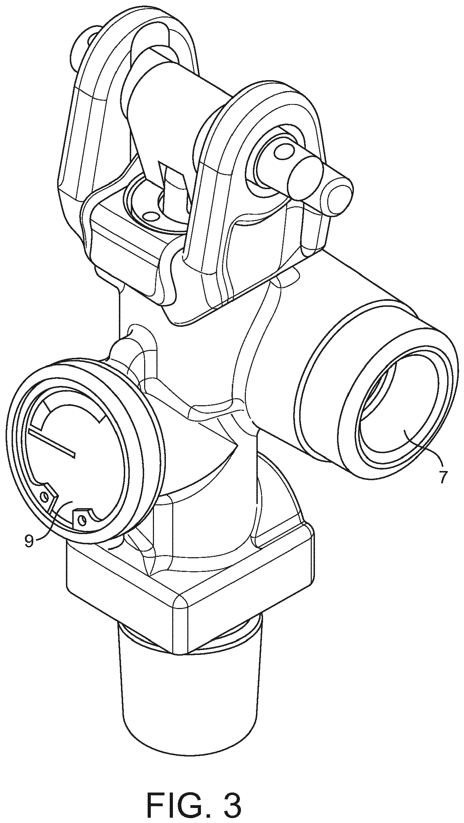

Fig. 3 is a perspective view of the valve body;
Fig. 4 shows the top portion of Fig. 1 in greater detail;
Fig. 5 is a schematic representation of the second crank arrangement for opening the valve;
Fig. 6 is a schematic representation of the third crank arrangement for opening the valve; and
Fig. 7 is a schematic representation of the fourth crank arrangement for opening the valve.

The fluid cylinder consists of a cylinder body 1 for a pressurised fluid and a valve body 2. The cylinder 1 is provided with a female screw thread 3 which mates with a male screw thread 4 on an outer surface of the lower portion of the valve body 2.

The valve body has an axial gas outlet path 5 extending centrally up through the valve body 2. Flow through the gas outlet path 5 is controlled by a valve element 6 which selectively blocks flow to a gas outlet port 7. The lateral port 8 of the pressure side of the valve element 6 leads to a pressure gauge G as is well known in the art.

The pressurised gas path is sealed above the valve element 6 by an inner 9 and outer 10 high pressure O-ring seal.

Lifting the valve element 6 from its seat 11 selectively opens and closes the gas flow path out of the cylinder. The mechanism for lifting the valve element 6 will now be described.

The valve element 6 is biased closed by a spring 15 the top end of which bears against a shoulder 16 in the valve body and the bottom of which bears against an annular flange 17 which forms part of the valve stem 18. As shown in the drawings, the valve stem 18 comprises a main stem 19, a valve element retaining member 20 and a valve element coupling number 21 all of which are rigidly fixed together.

As mentioned above, the pressurised gas path is sealed by inner and outer high pressure O-ring seals 9, 10. The inner seal 9 surrounds a lower annular component 22 in the case work and seals the interface between the valve stem retaining member 20 and the lower annular component 22. The outer high pressure O-ring seal 10 seals the interface between the lower annular component and the surrounding valve body.

There is a potential leak path past each of these seals. For the inner high pressure O-ring seal 9, this leakage path can leak around the valve stem 8, but this leakage path is sealed in an upper low pressure O-ring seal 23. Instead, a vent path is provided between the lower annular component 22 and an adjacent upper annular component 24. Similarly, there is a potential leakage flow path around the outer high pressure O-ring seal 10 and, again, this is routed to a vent path between the upper and lower annular components 22, 24. The interface between the upper annular component 24 and the surrounding case work is sealed by a low pressure seal 25. As a result of this, all leakage past the inner 9 and outer 10 high pressure O-ring seals 9, 10 is routed to a gas leakage outlet orifice 26.

In order to carry out a leakage test, the user can spray detecting fluid in the vicinity of the outlet of the gas leakage outlet orifice 26 which provides a simple indication of a leakage of the pressurised cylinder.

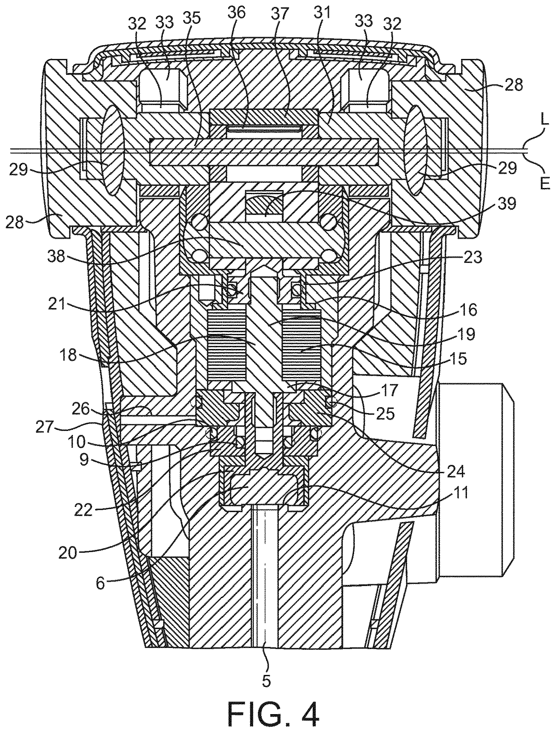

In order to open the valve element 6 against the action of the spring 15, a lever mechanism is provided. This comprises a lever 27 which is connected via a pair of bosses 28 and shear pins 29 to be rotatable with a shaft 31 about fixed lever axis L. The shear pins protect the valve mechanism against unexpected forces about the lever axis L. The shaft is mounted in bearings 32 in respective bosses 33 at the top of the valve body as best shown in Fig. 4. An eccentric pin 35 forms a central portion of the shaft 31 and is mounted to rotate about an eccentric axis E off-set from lever axis L and which moves as the lever 27 is operated. A linkage member 37 is rotatably mounted to the eccentric pin 35 via pin bearings 36 and extends at its lower end to a connecting pin 38 which extends through and is coupled to an orifice 39 in the valve element coupling member 21.

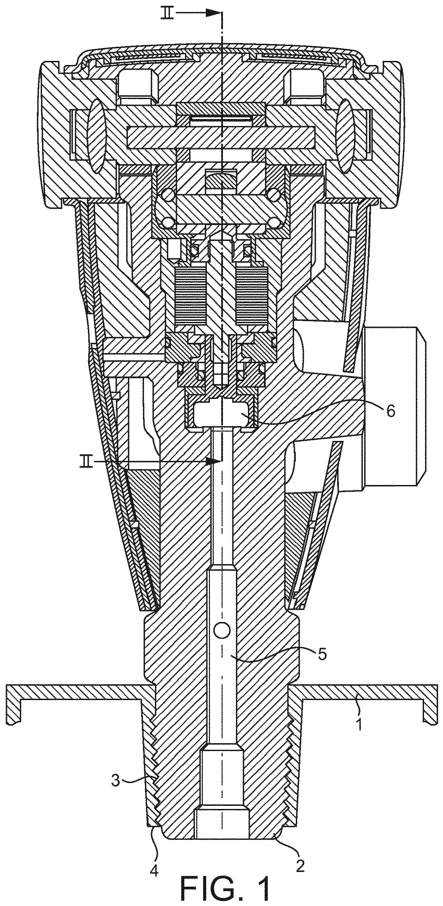

This provides a crank arrangement whereupon lifting the lifting lever 27 from its at rest position shown in Figs. 1 and 4 initially causes upward movement of the connecting pin 38 and hence the valve element, thereby compressing a spring 15. This effectively ensures that the valve is locked in the closed position as the spring force must be overcome before the valve can be opened. Once the lever 27 reaches an over-centre position, the direction of the force applied by the lever to the connecting pin 38 is reversed and this, together with the energy stored in the spring by the initial compression and the gas pressure in the cylinder causes the valve element 6 to snap open.

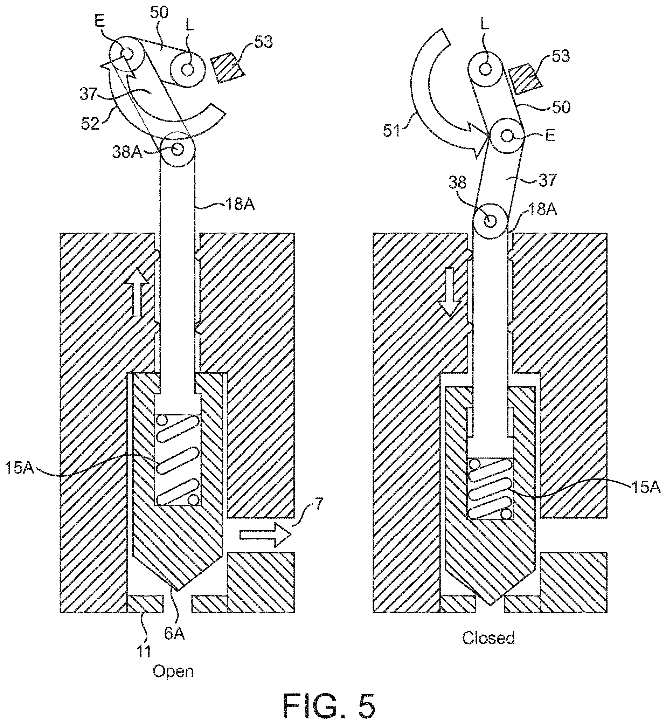

Further crank mechanisms for opening the valve element 6 will now be described with reference to Figs. 5 to 7. These are schematic representations which depict certain components which are related to the previously described components. Where different components are used, these differences are highlighted in the text.

The second example shown in Fig. 5 is similar to the previously described example. In this case, a first lever linkage 50 is a schematic representation of the off-set between the eccentric pin 35 rotatable about eccentric axis E and the rotatable shaft 31 rotatable about fixed lever axis L. This lever linkage member 50 is rigidly fixed to the lever 27. The lever linkage 50 is effectively fixed to rotate about the lever axis L at one end and is rotatable with respect to linkage member 37 at the opposite end. The linkage member 37 is as previously described and is connected to the valve stem 18A where a pin 38A which is a rotatable connection between the linkage member 37 and the valve stem 18A. While the previous example shows orifice 39 as having a non-circular shape, allowing relative axial movement between the pin 38 and the valve stem 18, the relative axial movement could be allowed for any one of the joints between the first and second members of the crank and the valve stem. A further difference in this example is that the spring 15A is now acting between the valve stem 18A and the valve element 6A, rather than between the valve stem 18 and the shoulder 16 on the valve body 2 as in the previous example.

As shown on the right-hand side of Fig. 5, the valve element 6A is held closed against the action of the fluid pressure in the cylinder as the valve stem 18A is towards the bottom end of its travel and the spring 15A is compressed which provides a biasing force on the valve element 6A. The linkage has been moved to this closed position by movement of the lever linkage member 50 in the direction of the arrow 51. To move from this closed position to the open position, the lever 27 and hence the lever linkage member 50 are rotated clockwise in the direction of the arrow 52. Initial movement in this direction causes downward movement of the valve stem 18A initially compressing the spring 15A further. As the crank mechanism passes bottom dead centre, both the gas pressure and the spring produce a clockwise moment on the linkage member 50 thereby quickly forcing the valve element open in which the user will feel as a "snap". Thus, the valve is effectively locked in the closed position by the fact that the user has to work against the force of the spring 15A in order to push the crank mechanism past bottom dead centre before the valve will open.

In order to close the valve, the crank mechanism is moved from the position shown on the left-hand side of Fig. 5 in the direction of arrow 51. This will compress the spring 15A and force the valve element 6A downwards against the action of the fluid pressure until the crank reaches bottom dead centre, at which time the compression force on the spring is removed and the spring will expand forcing the crank mechanism into the closed position shown on the right-hand side of Fig. 5, with this energy that is returned from the spring providing the locking force referred to above. A travel stop is shown schematically as 53 in Fig. 5 prevents further rotation of the crank beyond the closed position.

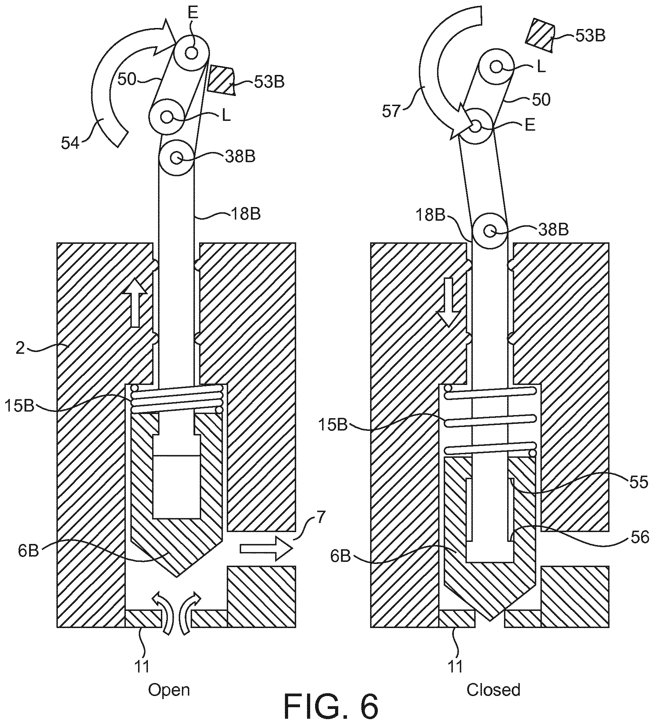

A third example is shown in Fig. 6. This is configured in a similar manner to Fig. 5, except that the spring 15B acts between the valve element 6B and the valve body 2.

In the closed position shown on the right-hand side of Fig. 6, the spring 15B urges the valve 6B closed against the action of the fluid pressure. In order to move to the open position, the lever linkage member 50 is moved clockwise in the direction of arrow 54 initially lifting the valve stem 18B until a shoulder 55 on the valve element engages with a corresponding shoulder 56 on the valve element 6B which lifts the valve element 6B and depresses the spring 18B until the crank mechanism reaches top dead centre. Once beyond top dead centre, the fully compressed spring produces a clockwise moment on the lever linkage member 50 quickly urging it to the open position shown on the left-hand side of Fig. 6 from which further movement is presented by the stop 53B. The extension of the spring which occurs between the top dead centre and the open positions provides a locking force which must be overcome by the user in order to close the valve. In order to do this, the user rotates the lever and hence the lever linkage member 50 in an anti-clockwise direction shown by arrow 57 initially compressing the spring 15B until the linkage passes top dead centre, at which point the spring produces an anti-clockwise moment on the lever linkage member 50 thereby snapping the mechanism to the closed position.

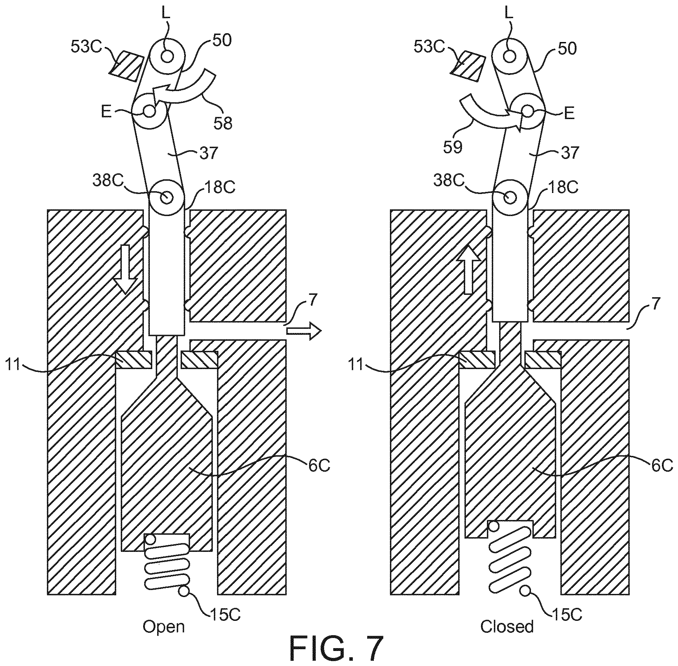

A fourth example is shown in Fig. 7. In this case, the valve element 6C and spring 15C are now within the pressurised gas space and the valve element moves in the opposite direction from the previous examples in order to open. The spring 15C has a support (not shown) against which it bears in order to generate the force on the valve element 6C. In the closed position, the valve element 6C is urged in place by the spring 15C and the gas pressure. In order to open the valve, the lever linkage member 50 is rotated clockwise as shown by arrow 58. Initial movement brings the crank mechanism towards and through bottom dead centre against the action of the spring and the fluid pressure. Once the crank passes bottom dead centre, the spring force generates a clockwise moment on the lever linkage member 50 which would tend to close the valve. However, further movement is stopped by the stop 53C to leave the valve in the open position shown on the left-hand side of Fig. 7. The valve is effectively "locked" in the open configuration as the user needs to do work to compress the spring by moving the lever linkage member 50 in the direction of arrow 57 to overcome the spring force and push the crank through its bottom dead centre position. Once it passes this position, the spring force and the fluid pressure act to push the valve closed.

## Claims

1. A pressurised fluid cylinder having a shut-off valve, the shut-off valve comprising a valve element (6) which is movable along a main axis towards and away from a valve seat (11) in order to close the valve; a valve stem (18) which is constrained to move axially along the main axis to operate the valve element and a crank for moving the valve stem; **characterised by** a biasing member (15) arranged to exert a biasing force on the valve element for all orientations of the crank, the crank comprising a first linkage (37) pivotally attached at one end (38) to the valve stem (18) and a second linkage (50) pivotally attached at one end (E) to the second end of the first linkage and being rotatable about an axis (L) at the opposite end of the second linkage (50); the crank being arranged so that rotation of the first linkage (37) in a first rotational direction initially causes biasing of the biasing member (15) and further rotation of the second linkage (50) causes the linkage (37, 50) to pass a top or bottom dead centre position, at which point a proportion of the energy stored in the biasing member (15) during its biasing causes the first linkage (37) to be biased further in the first rotational direction after the top or bottom dead centre position.

2. A pressurised fluid cylinder according to claim 1, wherein the biasing member (15A) acts to bias the valve element (6A) away from the valve stem with the pressurised fluid working against the biasing member (15A), whereby rotation of the first linkage (37) from an open position of the valve element compresses the biasing member (15A) and closes the valve element (6A) against the action of the fluid pressure, whereupon passing bottom dead centre causes the biasing member (15A) to urge the valve element away from the valve stem (18A) thereby causing further rotation of the first linkage (37) in the first direction to urge it into a fully closed position, in order to open the valve element (6A), the first linkage (37) is rotated in the opposite direction initially compressing the biasing member until the linkage (37, 50) passes bottom dead centre whereupon the biasing force of the biasing member (6A) and the pressure force act to urge the valve element (6A) to the fully open position.

3. A pressurised fluid cylinder according to claim 1, wherein the biasing member (15B) acts to bias the valve element (6B) towards the seat with the fluid pressure working against the valve element (6B), whereby to open the valve, the first linkage (37) is rotated in a first direction to compress the biasing member (6B) such that the fluid pressure opens the valve, and whereby movement of the first linkage (37) in the first rotational direction past a top dead centre position causes the biasing member (15B) to urge the first linkage (37) further in the first direction so as to push the first linkage (37) into a fully open position.

4. A pressurised fluid cylinder according to claim 1, wherein the valve element (6C) and biasing member (15C) are within the pressurised gas space and the valve element (6C) is closed by urging it outwardly of the pressurised gas space, and wherein the biasing member (15C) urges the valve element (6C) closed and the first linkage (37) is rotated, from a position in which the valve element (6C) is open, in a first direction past the bottom dead centre position compressing the biasing member (15C) as it travels towards the bottom dead centre position, whereupon, on passing the bottom dead centre position, the biasing member (15C) and fluid pressure urge the first linkage (37) further in the first direction in order to urge the first linkage (37) into a fully closed position.

## Patentansprüche

1. Fluiddruckzylinder mit einem Sperrventil, wobei das Sperrventil umfasst: ein Ventilelement (6), das entlang einer Hauptachse zu und weg von einem Ventilsitz (11) bewegbar ist, um das Ventil zu schließen; einen Ventilschaft (18), der eingeschränkt ist, um sich axial entlang der Hauptachse zu bewegen, um das Ventilelement und eine Kurbel zum Bewegen des Ventilschafts zu betätigen; **gekennzeichnet durch** ein Vorspannelement (15), das so angeordnet ist, um für alle Ausrichtungen der Kurbel eine Vorspannkraft auf das Ventil zu wirken, wobei die Kurbel ein erstes Verbindungselement (37), das drehbar an einem Ende (38) des Ventilschafts (18) befestigt ist, und ein zweites Verbindungselement (50), das an einem Ende (E) drehbar an dem zweiten Ende des ersten Verbindungselements befestigt und um eine Achse (L) am gegenüberliegenden Ende des zweiten Verbindungselements (50) drehbar ist; wobei die Kurbel so angeordnet ist, dass Drehung des ersten Verbindungelements (37) in eine erste Drehrichtung anfänglich Vorspannen des Vorspannelements (15) bewirkt, und weitere Drehung des zweiten Verbindungselements (50) bewirkt, dass das Verbindungselement (37, 50) eine obere oder untere Totpunktposition durchläuft, wobei an diesem Punkt ein Anteil der während seines Vorspannens im Vorspannelement (15) gespeicherten Energie bewirkt, dass das erste Verbindungselement (37) hinter der oberen oder unteren Totpunktposition weiter in eine erste Drehrichtung vorgespannt wird.

2. Fluiddruckzylinder nach Anspruch 1, wobei das Vorspannelement (15A) wirkt, um das Ventilelement (6A) weg vom Ventilschaft vorzuspannen, wobei das unter Druck stehende Fluid gegen das Vorspannelement (15A) arbeitet, wobei Drehung des ersten Verbindungselements (37) aus einer offenen Position des Ventilelements das Vorspannelement (15A) zusammendrückt und das Ventilelement (6A) gegen die Wirkung des Fluiddrucks schließt, woraufhin Durchlaufen des oberen und unteren Totpunkts bewirkt, dass das Vorspannelement (15A) das Ventilelement vom Ventilschaft (18A) weg zwingt, dadurch weitere Drehung des ersten Verbindungselements (37) in die erste Richtung bewirkend, um es in eine vollständig geschlossene Position zu zwingen, um das Ventilelement (6A) zu öffnen, wird das erste Verbindungselement (37) in die entgegengesetzte Richtung des anfänglichen Zusammendrückens des Vorspannelements gedreht, bis die Verbindungselemente (37, 50) den unteren Totpunkt durchlaufen, woraufhin die Vorspannkraft des Vorspannelements (6A) und die Druckkraft wirken, um das Ventilelement (6A) in die vollständig offene Position zu zwingen.

3. Fluiddruckzylinder nach Anspruch 1, wobei das Vorspannelement (15B) wirkt, um das Ventilelement (6B) in Richtung des Sitzes vorzuspannen, wobei der Fluiddruck gegen das Ventilelement (6B) arbeitet, wobei, zum Öffnen des Ventils, das erste Verbindungselement (37) in eine erste Richtung gedreht wird, um das Vorspannelement (6B) so vorzuspannen, dass der Fluiddruck das Ventil öffnet, und wobei Bewegung des ersten Verbindungselements (37) in die erste Drehrichtung über eine obere Totpunktposition hinaus bewirkt, dass das Vorspannelement (15B) das erste Verbindungselement (37) weiter in die erste Richtung zwingt, um das erste Verbindungselement (37) in eine vollständig offene Position zu drücken.

4. Fluiddruckzylinder nach Anspruch 1, wobei das Ventilelement (6C) und das Vorspannelement (15C) innerhalb des Raums des unter Druck stehenden Gases sind und das Ventilelement (6C) geschlossen wird, indem es ausgehend vom Raum des unter Druck stehenden Gases nach außen gezwungen wird, und wobei das Vorspannelement (15C) das Ventilelement (6C) in die geschlossene Position zwingt und das erste Verbindungselement (37) aus einer Position, in der das Ventilelement (6C) offen ist, in eine erste Richtung über die obere Totpunktposition gedreht wird, wobei das Vorspannelement (15C) zusammengedrückt wird, während es sich zur unteren Totpunktposition bewegt, wobei, beim Durchlaufen der unteren Totpunktposition, das Vorspannelement (15C) und der Fluiddruck das erste Verbindungselement (37) weiter in die erste Richtung zwingen, um das erste Verbindungselement (37) in eine vollständig geschlossene Position zu zwingen.

## Revendications

1. Cylindre de fluide sous pression comportant une valve de retenue, la valve de retenue comprenant un élément (6) de valve qui peut s'approcher et s'éloigner d'un siège (11) de valve suivant un axe principal afin de fermer la valve ; une tige (18) de valve qui est contrainte de se déplacer axialement suivant l'axe principal pour faire fonctionner l'élément de valve et une manivelle pour déplacer la tige de valve, **caractérisé par** un élément de sollicitation (15) agencé pour exercer une force de sollicitation sur l'élément de valve pour toutes les orientations de la manivelle, la manivelle comprenant une première tringlerie (37) fixée pivotante à une extrémité (38) à la tige (18) de valve et une seconde tringlerie (50) fixée pivotante à une extrémité (E) à la seconde extrémité de la première tringlerie et pouvant tourner autour d'un axe (L) à l'extrémité opposée de la seconde tringlerie (50) ; la manivelle étant agencée de façon à ce que la rotation de la première tringlerie (37) dans un premier sens de rotation provoque initialement une sollicitation de l'élément de sollicitation (15) et la rotation complémentaire de la seconde tringlerie (50) fait passer la tringlerie (37, 50) par une position de point mort haut ou bas, auquel point une partie de l'énergie stockée dans l'élément de sollicitation (15) pendant sa sollicitation sollicite la première tringlerie (37) plus encore dans le premier sens de rotation après la position de point mort haut ou bas.

2. Cylindre de fluide sous pression selon la revendication 1, dans lequel l'élément de sollicitation (15A) agit pour solliciter l'élément (6A) de valve et l'éloigner de la tige de soupape, le fluide sous pression travaillant contre l'élément de sollicitation (15A), moyennant quoi la rotation de la première tringlerie (37) à partir d'une position ouverte de l'élément de valve comprime l'élément de sollicitation (15A) et ferme l'élément (6A) de valve en contrecarrant l'action de la pression de fluide, après quoi le passage du point mort bas fait que l'élément de sollicitation (15A) éloigne l'élément de soupape de la tige (18A) de valve, entraînant de ce fait une rotation complémentaire de la première tringlerie (37) dans le premier sens pour la pousser dans une position complètement fermée, afin d'ouvrir l'élément (6A) de valve, la première tringlerie (37) tourne dans le sens opposé en comprimant initialement l'élément de sollicitation jusqu'à ce que la tringlerie (37, 50) dépasse le point mort bas, après quoi la force de sollicitation de l'élément de sollicitation (6A) et la force de pression agissent pour pousser l'élément (6A) de valve à la position complètement ouverte.

3. Cylindre de fluide sous pression selon la revendication 1, dans lequel l'élément de sollicitation (15B) agit pour solliciter l'élément (6B) de valve et l'approcher du siège, le fluide sous pression travaillant contre l'élément (6B) de valve, moyennant quoi, pour ouvrir la valve, la première tringlerie (37) tourne dans un premier sens pour comprimer l'élément de sollicitation (6B) de telle sorte que la pression du fluide ouvre la valve, et moyennant quoi le mouvement de la première tringlerie (37) dans le premier sens de rotation au-delà de la position de point mort haut l'élément de sollicitation (15B) pousse la première tringlerie (37) plus loin dans le premier sens de façon à pousser la première tringlerie (37) dans une position complètement ouverte.

4. Cylindre de fluide sous pression selon la revendication 1, dans lequel l'élément (6C) de valve et l'élément de sollicitation (15C) sont à l'intérieur de l'espace de gaz sous pression et on ferme l'élément (6C) de valve en le poussant vers l'extérieur de l'espace de gaz sous pression, et
dans lequel l'élément de sollicitation (15C) pousse l'élément (6C) de valve pour le fermer et la première tringlerie (37) est entraînée en rotation, d'une position dans laquelle l'élément (6C) de valve est ouvert, dans un premier sens au-delà de la position de point mort bas, en comprimant l'élément de sollicitation (15C) au fur et à mesure qu'il se déplace vers la position de point mort bas, après quoi, au passage de la position de point mort bas, l'élément de sollicitation (15C) et la pression de fluide poussent la première tringlerie (37) plus loin dans le premier sens afin de pousser la première tringlerie (37) dans une position complètement fermée.
